# EUROPÄISCHE PATENTSCHRIFT

(11) **EP 1 498 315 B1**
(45) Veröffentlichungstag und Bekanntmachung des Hinweises auf die Patenterteilung: **07.10.2009**
(21) Anmeldenummer: 04015034.4
(22) Anmeldetag: 25.06.2004
(51) Int. Cl.: B60R 5/04

(54) **Funktionsvorrichtung für einen Laderaum eines Kraftfahrzeuges**
Functional device for a vehicle luggage compartment
Dispositif fonctionnel pour le compartiment à bagages d'un véhicule

(30) Priorität: 17.07.2003 DE 10333424
(43) Veröffentlichungstag der Anmeldung: 19.01.2005
(73) Patentinhaber: BOS GmbH & Co. KG, 73760 Ostfildern (DE)
(72) Erfinder: Haspel, Klaus, 72108 Rottenburg (DE); Kobiela, Andreas, 72654 Neckartenzlingen (DE)
(74) Vertreter: Patentanwälte Ruff, Wilhelm, Beier, Dauster & Partner

(56) Entgegenhaltungen:
- EP-A2- 1 479 564

## Beschreibung

Die Erfindung betrifft eine Funktionsvorrichtung für einen Laderaum eines Kraftfahrzeugs mit einer laderaumseitig fixierbaren Gehäuseeinheit, in der wenigstens ein flexibles Flächengebilde zwischen einer kompakt abgelegten Ruheposition und einer zumindest ungefähr parallel zu einem Laderaumboden ausgezogenen Funktionsposition beweglich gelagert ist, wobei in Abstand unterhalb des wenigstens eine Flächengebildes wenigstens eine weitere Flächengebildeanordnung vorgesehen ist, die in einer Funktionsposition in einer zu der Funktionsposition des wenigstens einen Flächengebildes parallelen Ebene ausgerichtet ist und die in einer Ruheposition kompakt im Bereich der Gehäuseeinheit abgelegt ist.

Die DE 19833571 C1 offenbart eine Funktionsvorrichtung für einen Laderaum eines Kraftfahrzeugs, bei der einer auf eine Wickelwelle aufwickelbaren Werkstoffbahn eine Werkstoff-Teilbahn zugeordnet ist. Die Werkstoff-Teilbahn ist an der Werkstoff-Hauptbahn befestigt. Die Teilbahn ist netzförmig gestaltet und dient als vertikal einhängbares Trennnetz. Die Hauptbahn bildet eine Laderaumabdeckung und ist horizontal einhängbar. Bei eingehängter Laderaumabdeckung liegt der Trennnetz-Abschnitt funktionslos parallel auf der Laderaumabdeckung auf.

Eine weitere Funktionsvorrichtung ist in Form einer Laderaumabdeckung für Kombi-Personenkraftwagen allgemein bekannt. Die bekannte Laderaumabdeckung weist eine Gehäuseeinheit in Form eines Kassettengehäuses auf, das im Bereich einer Rückenlehnenanordnung einer Fondsitzbank laderaumseitig und lösbar befestigt ist. In dem Kassettengehäuse ist eine Wickelwelle drehbar gelagert, auf der ein flexibles Flächengebilde auf- und abrollbar gehalten ist. Das flexible Flächengebilde ist in eine etwa horizontale Funktionsposition ausziehbar, in der der Laderaum des Kombi-Personenkraftwagens etwa parallel zu einem Laderaumboden abgedeckt ist.

Aufgabe der Erfindung ist es, eine Funktionsvorrichtung der eingangs genannten Art zu schaffen, die eine verbesserte Funktionsvariabilität für den Laderaum ermöglicht.

Diese Aufgabe wird dadurch gelöst, dass wenigstens eine Führungsprofilierung vorgesehen ist, an der ein an der Flächengebildeanordnung stirnseitig angeordnetes Auszugselement verschiebbar geführt ist.

Durch die erfindungsgemäße Lösung ist es möglich, zusätzlich zu der Funktion des wenigstens einen flexiblen Flächengebildes wenigstens eine weitere Funktion aufgrund der wenigstens einen zusätzlichen Flächengebildeanordnung zu schaffen. Insbesondere ist es möglich, durch die zusätzliche Flächengebildeanordnung einen Zwischenboden im Abstand unterhalb einer oberen Laderaumabdeckung zu schaffen. Da die zusätzliche Flächengebildeanordnung in der Ruheposition kompakt im Bereich der Gehäuseeinheit abgelegt ist, ist es möglich, die Flächengebildeanordnung raumsparend so unterzubringen, dass die Beladekapazität des Laderaumes nicht beeinträchtigt ist. Das kompakte Ablegen des zusätzlichen Flächengebildes kann entweder durch ein Aufrollen auf eine Wickelwelle oder auch durch ein kompaktes Zusammenschieben der Flächengebildeanordnung nach Art einer Ziehharmonikafaltung erfolgen. Als Flächengebildeanordnung ist vorzugsweise eine flexible Flächenstruktur in Form einer Textilbahn vorgesehen, die blickdicht gestaltet ist. Es ist auch möglich, die Flächengebildeanordnung ergänzend oder alternativ reißfest auszubilden. Es ist auch möglich, anstelle eines blickdichten Flächengebildes ein durchsichtiges Trennnetz vorzusehen, dessen Reißfestigkeit und dessen Verankerungen zu einer Funktionsposition so stark ausgebildet sind, dass Ladegut aus dem Laderaumboden auch bei Fahrzeugaufprallbelastungen sicher zurückgehalten wird. Schließlich ist es auch möglich, als Flächengebildeanordnung eine oder mehrere formstabile Flächenstrukturen in Form von Platten, Rahmen mit Netzaufspannung oder ähnlichem vorzusehen, die die Laderaumfläche teilweise oder vollständig überdecken können. Durch die erfindungsgemäße Lösung ist es möglich, die Flächengebildeanordnung auch während ihrer Auszieh- oder Aufrollbewegung definiert zu führen. Dies ermöglicht insbesondere eine automatische und somit ferngesteuerte Überführung der Flächengebildeanordnung in die Funktionsposition oder in die Ruheposition.

In Ausgestaltung der Erfindung weist die Flächengebildeanordnung ein auf einer Wickelwelle gehaltenes, flexibles Flächengebilde auf. Die Wickelwelle ist vorzugsweise parallel zu einer Wickelwelle für das wenigstens eine flexible Flächengebilde vorgesehen.

In weiterer Ausgestaltung der Erfindung ist die Wickelwelle an einem mit der Gehäuseeinheit insbesondere einstückig verbundenen Gehäuseabschnitt parallel zu einer Längserstreckung der Gehäuseeinheit drehbar gelagert. Der Gehäuseabschnitt ist mit der Gehäuseeinheit entweder einstückig oder durch Befestigungsmittel verbunden. Bei einer einstückigen Verbindung ist der Gehäuseabschnitt vorzugsweise ein fortgesetzter Teil der Gehäuseeinheit. Es ist auch möglich, den Gehäuseabschnitt als separates Gehäuse zu gestalten, das mittels geeigneter Befestigungsmittel fest mit der Gehäuseeinheit verbunden wird.

In weiterer Ausgestaltung der Erfindung ist die wenigstens eine Führungsprofilierung laderaumseitig zwischen einer Ruheposition und einer Funktionsposition beweglich angeordnet. Dadurch ist es möglich, die wenigstens eine Führungsprofilierung bei Nichtbedarf der Flächengebildeanordnung platzsparend in ihrer Ruheposition unterzubringen. Sobald die Flächengebildeanordnung in ihre Funktionsposition überführt werden soll, kann die Führungsprofilierung in die entsprechende Funktionsposition gebracht werden. Eine bewegliche Anordnung kann durch eine Schwenklagerung der wenigstens einen Führungsprofilierung oder durch Linear- oder Kurvenführungen der Führungsprofilierung geschaffen werden. Vorzugsweise sind zwei Führungsprofilierungen vorgesehen, die das Auszugselement der Flächengebildeanordnung auf gegenüberliegenden Seiten für eine Führung des Auszugselementes flankieren.

In weiterer Ausgestaltung der Erfindung ist der Gehäuseabschnitt als nach unten öffnender Klappenteil gestaltet, an dessen Innenseite die Wickelwelle gehalten ist. Bei Nichtbedarf ist der Gehäuseabschnitt an der Gehäuseeinheit kompakt angeordnet. Erst bei einer Öffnung des Klappenteiles kann die Flächengebildeanordnung ergriffen und in ihre Funktionsposition überführt werden.

Weitere Vorteile und Merkmale der Erfindung ergeben sich aus den Ansprüchen. Nachfolgend sind bevorzugte Ausführungsbeispiele der Erfindung beschrieben und anhand der Zeichnungen dargestellt.
- Fig. 1: zeigt in perspektivischer Darstellung eine Ausführungsform einer erfindungsgemäßen Funktionsvorrichtung für einen Laderaum eines Personenkraftwagens,
- Fig. 2: in perspektivischer Darstellung eine weitere Ausführungsform einer erfindungsgemäßen Funktionsvorrichtung ähnlich Fig. 1,
- Fig. 3: in schematischer Schnittdarstellung die Funktionsvorrichtung gemäß Fig. 1 in einer Ruheposition,
- Fig. 4: die Funktionsvorrichtung nach Fig. 3 in einer ausgeklappten Funktionsstellung und
- Fig. 5: eine Wickelwelle für eine Funktionsvorrichtung ähnlich den Fig. 1 bis 4 in ihrer ausgeschwenkten Funktionsstellung.

Ein als Gehäuseeinheit dienendes Kassettengehäuse 1 ist in grundsätzlich bekannter Weise in nicht näher dargestellter Form im Bereich einer Rückseite einer Sitzlehnenanordnung einer Fondsitzbank in einem Laderaum eines Personenkraftwagens laderaumfest positioniert. Als Personenkraftwagen sind Kombi-Personenkraftwagen oder Großraumlimousinen vorgesehen. In dem Kassettengehäuse 1 ist eine als flexibles Flächengebilde ausgeführte Laderaumabdeckung 2 gehalten, die auf einer nicht näher dargestellten Wickelwelle auf- und abrollbar gelagert ist. Die Laderaumabdeckung 2 ist zwischen einer bis auf ein formstabiles Konturteil im Kassettengehäuse 1 aufgewickelt integrierten Ruheposition und einer ausgezogenen Funktionsposition beweglich gelagert. In der ausgezogenen Funktionsposition ist die Laderaumabdeckung 2 etwa horizontal und ungefähr auf Höhe einer Fahrzeugbordkante in dem Laderaum so aufgespannt, dass der Laderaum im wesentlichen vollständig überdeckt ist. Die Laderaumabdeckung 2 ist blickdicht ausgeführt. Mit Hilfe von Befestigungselementen im Bereich des formstabilen Konturteiles ist die Laderaumabdeckung 2 in ihrer etwa horizontal ausgezogenen Funktionsposition laderaumseitig in korrespondierenden Halterungen fixierbar.

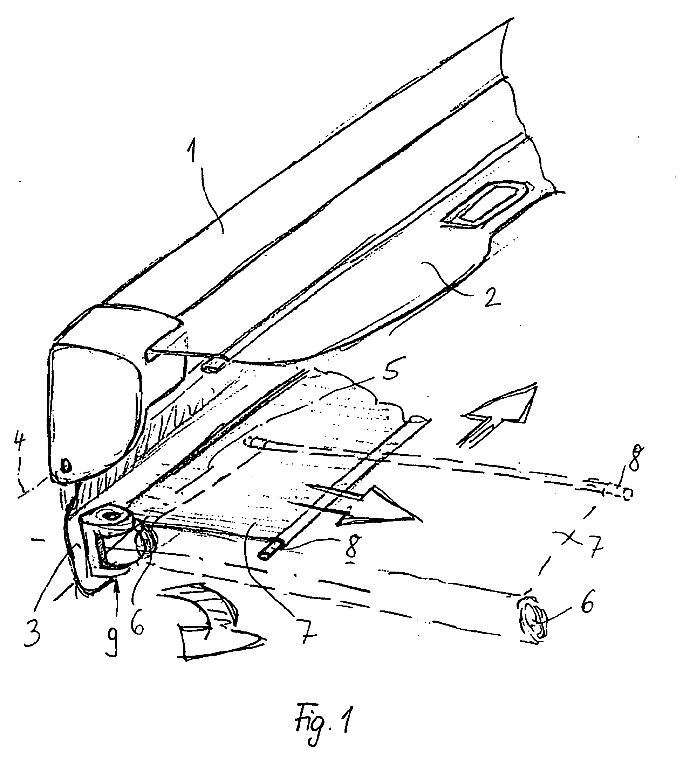

Bei der dargestellten Ausführungsform gemäß Fig. 1 ist in Abstand unterhalb der Laderaumabdeckung 2 eine als Flächengebildeanordnung dienende Flächenstruktur 7 vorgesehen, die ebenfalls flexibel aus einer Textilbahn ausgeführt ist. Auch die Flächenstruktur 7 ist auf einer Wickelwelle 6 auf- und abwickelbar gelagert. Die Wickelwelle 6 ist parallel zu der Wickelwelle der Laderaumabdeckung 2 mit in Fahrzeugquerrichtung ausgerichteter Drehachse 5 an einem klappenartigen Gehäuseteil 3 des Kassettengehäuses 1 drehbeweglich gelagert. Die Flächenstruktur 7 weist an ihrem in Auszugrichtung vorderen Stirnende eine Auszugleiste 8 auf, die in der ausgezogenen Funktionsposition der Flächenstruktur 7 zwischen fahrzeugseitigen bzw. laderaumseitigen Halteaufnahmen lösbar einhängbar ist. Dadurch wird die Flächenstruktur 7 in der ausgezogenen Funktionsposition im Laderaum gesichert.

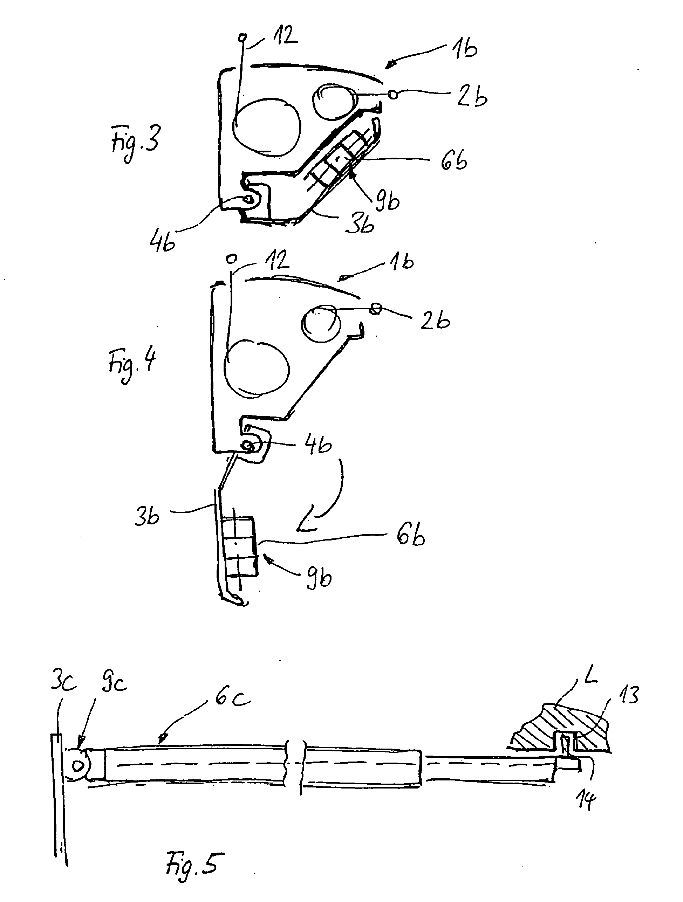

Der klappenartige Gehäuseteil 3 ist um eine Schwenkachse 4, die parallel zur Wickelwelle der Laderaumabdeckung 2 ausgerichtet ist, an dem Kassettengehäuse 1 analog der Ausführungsform nach den Fig. 3 und 4 zwischen einer Schließposition und einer Öffnungsposition (in Fig. 1 dargestellt) schwenkbeweglich gelagert. Dem Gehäuseteil 3 sind Rast- oder Sicherungsmittel zugeordnet, die den Gehäuseteil 3 in der geschlossenen Position analog Fig. 3 an dem Kassettengehäuse 1 fixiert halten. Vorzugsweise sind die Rast- oder Sicherungsmittel manuell lösbar, so dass durch eine einfache Betätigung eines entsprechenden Betätigungsgliedes der klappenartige Gehäuseteil 3 sich öffnet und durch sein Eigengewicht nach unten schwenkt. An einer Innenseite des klappenartigen Gehäuseteiles 3, die in der aufgeklappten Öffnungsposition des Gehäuseteiles 3 zu einem Heck des Laderaumes gerichtet ist, ist die Wickelwelle 6 in beschriebener Weise drehbar gelagert.

In nicht näher dargestellter Weise ist der klappenartige Gehäuseteil 3 in seiner Öffnungsposition gemäß Fig. 1 im Bereich der Rückenlehnenanordnung der Fondsitzbank arretiert. Alternativ ist es möglich, eine Arretierung der Öffnungsposition durch entsprechende Blockiermittel im Bereich der Schwenkachse 4 relativ zu dem Kassettengehäuse 1 vorzusehen. In beiden Fällen dient die Arretierung und Positionssicherung des klappenartigen Gehäuseteiles 3 dazu, einen Rückhalt gegen Ausziehkräfte zu bewirken, die beim Ausziehen der Flächenstruktur 7 auf die Flächenstruktur 7 und damit auf die Lagerung der Wickelwelle 6 wirken.

Die Wickelwelle 6 ist zusätzlich zu ihrer Drehbeweglichkeit um die Drehachse 5 im Bereich wenigstens eines Stirnendes zusätzlich um eine in Fahrzeughochrichtung ausgerichtete Klappachse vorzugsweise rechtwinklig zu dem Gehäuseteil 3 in den Laderaum hinein wegschwenkbar. In dieser in Fig. 1 gestrichelt dargestellten Position ist die Flächenstruktur 7 ebenfalls ausziehbar, wobei sich in dieser Ausziehposition die Drehrichtung der Wickelwelle 6 umkehrt. Für die dann in Fahrzeugquerrichtung (siehe Pfeil) verlaufende Ausziehrichtung der Flächenstruktur 7 sind für die ausgezogene Funktionsposition in nicht näher dargestellter Weise fahrzeug- oder laderaumseitige Halteaufnahmen vorgesehen, die eine Positionssicherung der Flächenstruktur 7 in der ausgezogenen Funktionsposition ermöglichen. Bei dem dargestellten Ausführungsbeispiel ist das Schwenkgelenk 9 so stabil ausgeführt und im übrigen mit einer Sperreinrichtung versehen, dass die Wickelwelle 6 in der rechtwinklig ausgestellten Funktionsposition auch bei Ausziehbewegungen der Flächenstruktur 7 positionsgesichert bleibt. Das Schwenkgelenk 9 ist zudem so stabil ausgeführt, dass es die frei abragende Wickelwelle 6 nach Art eines Schwenkarmes trägt. Das frei nach außen ragende Stirnende der Wickelwelle 6 ist im übrigen aus einer Lagereinheit im Bereich des Gehäuseteiles 3 ausgeklinkt und kann selbstverständlich nach dem Zurückschwenken wieder eingeklinkt und dort positionsgesichert werden.

Es ist auch möglich, analog zu der Darstellung nach Fig. 5 an dem frei abragenden Stirnende der Wickelwelle 6 ein teleskopartig ausziehbares Befestigungsprofil vorzusehen, an dessen Stirnende ein Befestigungselement zur laderaumseitigen Fixierung in einer laderaumseitigen Befestigungsaufnahme angeordnet ist. Dadurch ist die Wickelwelle sowohl im Bereich des Schwenkgelenkes 9 als auch im Bereich ihres gegenüberliegenden Stirnendes fixiert. Bei der in Fig. 5 dargestellten Ausführungsform ist die Wickelwelle mit dem Bezugszeichen 6c versehen. In der Wickelwelle 6c ist das nicht näher bezeichnete Befestigungsprofil teleskopförmig ausziehbar integriert. Die Wickelwelle 6c ist analog der Ausführung nach Fig. 1 um ein stabiles Schwenkgelenk 9c an einem Gehäuseteil 3c gehalten. Für die Fixierung des Befestigungsprofiles an einer Seitenwand des Laderaums L ist in der Seitenwand eine Befestigungsaufnahme 13 vorgesehen, in die ein an dem Befestigungsprofil korrespondierend angeordnetes Befestigungselement 14 eingreift.

Wesentlicher Unterschied bei der Ausführungsform nach den Fig. 3 und 4 ist es, dass hier in dem Kassettengehäuse 1b noch ein weiteres, vertikal nach oben ausziehbares Flächengebilde 12 vorgesehen ist. Das Flächengebilde 12 ist als Trennnetz zur Abtrennung des Laderaumes von dem Fahrgastraum des Personenkraftwagens vorgesehen. Auch bei dieser Ausführungsform ist auf der dem Laderaumboden zugewandten Rückseite des Kassettengehäuses 1b ein klappenartiger Gehäuseteil 3b vorgesehen, der um eine Schwenkachse 4b zwischen einer Schließposition (Fig. 3) und einer Öffnungsposition (Fig. 4) klappbeweglich gelagert ist. Der klappenartige Gehäuseteil 3b entspricht bis auf die nachfolgend beschriebenen Unterschiede der Ausführungsform nach Fig. 1, so dass zur näheren Erläuterung auf die Beschreibung zur Fig. 1 verwiesen wird. An einer Innenseite des Gehäuseteiles 3b ist eine Wickelwelle 6b zur Halterung einer gemäß Fig. 1 ausziehbaren Flächenstruktur gelagert. Die Wickelwelle 6b ist analog der Ausführung nach Fig. 1 zusätzlich um eine in Fahrzeughochrichtung ausgerichtete Schwenkachse im Bereich ihres einen Stirnendes schwenkbeweglich gelagert. Hierzu ist ein Schwenkgelenk 9b vorgesehen. Die Wickelwelle 6b kann so etwa rechtwinklig zu dem Gehäuseteil 3b zu einem Heck des Laderaumes hin geschwenkt werden, so dass eine auf der Wickelwelle gehaltene, nicht näher dargestellte Flächenstruktur quer zur Ausziehrichtung der Laderaumabdeckung 2b etwa horizontal ausziehbar ist. Das Schwenkgelenk 9b kann entweder analog der Einarmlösung gemäß Fig. 1 oder aber mit zusätzlicher Stützung im Bereich des gegenüberliegenden Stirnendes gemäß Fig. 5 ausgeführt sein.

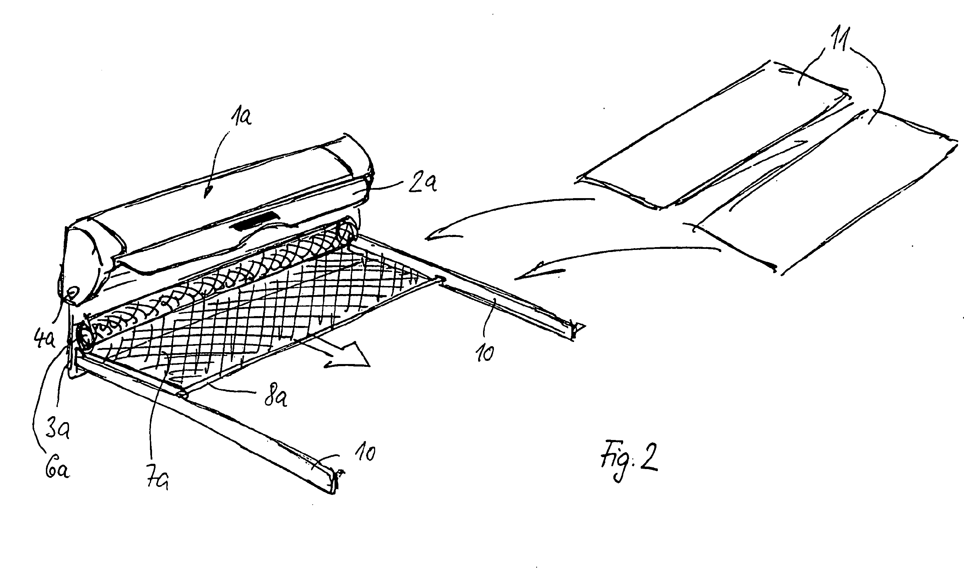

Bei der Ausführungsform nach Fig. 2 ist ein Kassettengehäuse 1 a mit einer Laderaumabdeckung 2a versehen, die der Ausführung nach Fig. 1 entspricht. Es wird für eine nähere Erläuterung daher auf die Beschreibung zur Fig. 1 verwiesen. Zusätzlich ist im Bereich einer Unterseite des Kassettengehäuses 1a ein klappenartiger Gehäuseteil 3a vorgesehen, der analog der Ausführungen nach den Fig. 1 und 3, 4 um eine in Fahrzeugquerrichtung ausgerichtete Schwenkachse 4a schwenkbeweglich an dem Kassettengehäuse 1a gelagert ist. Auch der Gehäuseteil 3a weist im Bereich seiner Innenseite eine Lagerung für eine drehbare Wickelwelle 6a auf, die parallel zu einer Wickelwelle für die Laderaumabdeckung 2a angeordnet ist. Knapp unterhalb der Wickelwelle 6a sind zusätzlich an dem Gehäuseteil 3a zwei als Führungsprofilierungen dienende Führungsarme 10 vorgesehen, die zwischen einer auf die Ebene des Gehäuseteils 3a nach innen geschwenkten Ruheposition und einer in Fig. 2 dargestellten Führungsposition jeweils um eine in Fahrzeughochrichtung ausgerichtete Schwenkachse schwenkbeweglich gelagert sind. Die Führungsarme sind an ihren einander zugewandten Innenseiten mit Profilschienen oder ähnlichen Profilierungsabschnitten versehen, in die stirnseitige Enden einer Auszugleiste 8a der Flächenstruktur 7a einführbar und in diesen linear verschiebbar sind. Durch die Führungsschienen 10 ist es möglich, die Auszugleiste 8a über den gesamten oder zumindest weitgehend den gesamten Ausziehweg der Flächenstruktur 7a zwischen der aufgerollten Ruheposition und der ausgezogenen Funktionsposition so zu führen, dass die Auszugleiste 8a zumindest im wesentlichen immer etwa parallel zu einer Drehachse der Wickelwelle 6a ausgerichtet ist. Sobald die Flächenstruktur 7a wieder in ihre aufgewickelte Ruheposition zurückgeführt ist, werden die entsprechenden Stirnenden der Auszugleiste 8a aus den Führungsschienen 10 ausgehängt, so dass die Führungsschienen 10 in ihre an dem Gehäuseteil 3a anliegende Ruheposition nach innen zurückgeklappt werden können. Das Gehäuseteil 3a ist derart gewölbt ausgeführt, dass das Gehäuseteil 3a in seiner Schließposition zusammen mit den eingeklappten Führungsschienen 10 nach oben geschwenkt und in dieser Schließposition fixiert werden kann, ohne dass die Führungsschienen 10 die Schließ- oder Fixierbewegung behindern.

Alternativ oder ergänzend sind die Führungsschienen 10 so ausgeführt, dass zwischen die einander in der ausgeklappten Funktionsposition parallel gegenüberliegenden Führungsschienen 10 eine Flächengebildeanordnung in Form von ein oder mehreren formstabilen Platten 11 eingelegt werden kann. Diese können einen Zwischenboden oberhalb des eigentlichen Laderaumbodens definieren. Die Platten 11 können bei Bedarf wieder entfernt werden.

## Patentansprüche

1. Funktionsvorrichtung für einen Laderaum eines Kraftfahrzeugs mit einer laderaumseitig fixierbaren Gehäuseeinheit (1a), in der wenigstens ein flexibles Flächengebilde (2a) zwischen einer kompakt abgelegten Ruheposition und einer zumindest ungefähr parallel zu einem Laderaumboden ausgezogenen Funktionsposition beweglich gelagert ist, wobei in Abstand unterhalb des wenigstens einen Flächengebildes (2a) wenigstens eine weitere Flächengebildeanordnung (7a) vorgesehen ist, die in einer Funktionsposition in einer zu der Funktionsposition des wenigstens einen Flächengebildes (2a) parallelen Ebene ausgerichtet ist, und die in einer Ruheposition kompakt im Bereich der Gehäuseeinheit (1a) abgelegt ist, **dadurch gekennzeichnet, dass** wenigstens eine Führungsprofilierung (10) vorgesehen ist, an der ein an der Flächengebildeanordnung (7a) stirnseitig angeordnetes Auszugselement (8a) verschiebbar geführt ist.

2. Funktionsvorrichtung nach Anspruch 1, **dadurch gekennzeichnet, dass** die Flächengebildeanordnung eine auf einer Wickelwelle (6a) gehaltene, flexible Flächenstruktur (7a) aufweist.

3. Funktionsvorrichtung nach Anspruch 2, **dadurch gekennzeichnet, dass** die Wickelwelle (6a) an einem mit der Gehäuseeinheit (1a) insbesondere einstückig verbundenen Gehäuseabschnitt (3a) parallel zu einer Längserstreckung der Gehäuseeinheit (1a) drehbar gelagert ist.

4. Funktionsvorrichtung nach Anspruch 1, **dadurch gekennzeichnet, dass** die Führungsprofilierung (10) laderaumseitig zwischen einer Ruheposition und einer Funktionsposition beweglich angeordnet ist.

5. Funktionsvorrichtung nach Anspruch 4, **dadurch gekennzeichnet, dass** die Führungsprofilierung (10) an der Gehäuseeinheit (1a) schwenkbeweglich angeordnet ist.

6. Funktionsvorrichtung nach Anspruch 5, **dadurch gekennzeichnet, dass** zwei Führungsprofilierungen (10) vorgesehen sind, die in ihrer Führungsposition die Flächengebildeanordnung (7a) auf gegenüberliegenden Seiten flankieren.

7. Funktionsvorrichtung nach Anspruch 3, **dadurch gekennzeichnet, dass** der Gehäuseabschnitt (3, 3a, 3b) Teil der Gehäuseeinheit ist.

8. Funktionsvorrichtung nach Anspruch 7, **dadurch gekennzeichnet, dass** der Gehäuseabschnitt als nach unten öffnender Klappenteil gestaltet ist, an dessen Innenseite die Wickelwelle (6, 6a, 6b) gehalten ist.

## Claims

1. Functional device for a luggage compartment of a vehicle having a housing unit (1a) fixable on the luggage compartment side and in which at least one flexible flat-shaped article (2a) is movably mounted between a compactly rolled rest position and a function position extending at least approximately parallel to a luggage compartment floor, where at a distance underneath the at least one flat-shaped article (2a) at least one further flat-shaped article arrangement (7a) is provided that is aligned in a function position in a plane parallel to the function position of the at least one flat-shaped article (2a) and is rolled compactly in a rest position in the area of the housing unit (1a), **characterized in that** at least one guide profile (10) is provided on which an extending element (8a) arranged on the end of the flat-shaped article arrangement (7a) is movably guided.

2. Functional device according to Claim 1, **characterized in that** the flat-shaped article arrangement has a flexible surface structure (7a) held on a winding shaft (6a).

3. Functional device according to Claim 2, **characterized in that** the winding shaft (6a) is rotatably mounted on a housing section (3a) connected in particular in one piece to the housing unit (1a) and parallel to a longitudinal extent of the housing unit (1a).

4. Functional device according to Claim 1, **characterized in that** the guide profile (10) is movably arranged on the luggage compartment side between a rest position and a function position.

5. Functional device according to Claim 4, **characterized in that** the guide profile (10) is swivellably arranged on the housing unit (1a).

6. Functional device according to Claim 5, **characterized in that** two guide profiles (10) are provided that flank in their function position the flat-shaped article arrangement (7a) on opposite sides.

7. Functional device according to Claim 3, **characterized in that** the housing section (3, 3a, 3b) is part of the housing unit.

8. Functional device according to Claim 7, **characterized in that** the housing section is designed as a downward-opening flap part on whose inner side the winding shaft (6, 6a, 6b) is held.

## Revendications

1. Dispositif fonctionnel pour le compartiment à bagages d'un véhicule, avec un corps de boîtier (1a) pouvant être fixé du côté du compartiment à bagages et dans lequel est logée au moins une structure plane souple (2a) de manière mobile entre une position de repos rangée de manière compacte et une position fonctionnelle déroulée au moins approximativement parallèle à un sol du compartiment à bagages, sachant que sous l'au moins une structure plane (2a) est prévue à une certaine distance au moins un autre système de structure plane (7a) qui, dans une position fonctionnelle, est disposé dans un plan parallèle à la position fonctionnelle de l'au moins une structure plane (2a) et, dans une position de repos, est rangée de manière compacte dans la zone du corps de boîtier (1a), **caractérisé en ce qu'**est prévu au moins un profilé de guidage (10) sur lequel est guidé de manière mobile l'élément de déroulement (8a) placé à l'avant du système de structure plane (7a).

2. Dispositif fonctionnel selon la revendication 1, **caractérisé en ce que** le système de structure plane présente une structure plane souple (7a) maintenue sur un arbre d'enroulement (6a).

3. Dispositif fonctionnel selon la revendication 2, **caractérisé en ce que** l'arbre d'enroulement (6a) est monté à rotation sur une section de boîtier (3a) reliée au corps de boîtier (1a), en particulier en faisant une seule pièce avec celui-ci, et qui est parallèle à un développement longitudinal du corps de boîtier (1a).

4. Dispositif fonctionnel selon la revendication 1, **caractérisé en ce que** le profilé de guidage (10) est disposé du côte du compartiment à bagages de manière mobile entre une position de repos et une position fonctionnelle.

5. Dispositif fonctionnel selon la revendication 4, **caractérisé en ce que** le profilé de guidage (10) est monté à pivotement dans le corps de boîtier (1a).

6. Dispositif fonctionnel selon la revendication 5, **caractérisé en ce que** sont prévus deux profilés de guidage (10) qui, dans leur position de guidage, flanquent le système de structure plane (7a) sur des côtés opposés,

7. Dispositif fonctionnel selon la revendication 3, **caractérisé en ce que** la section de boîtier (3, 3a, 3b) fait partie du corps de boîtier.

8. Dispositif fonctionnel selon la revendication 7, **caractérisé en ce que** la section de boîtier est conçue comme pièce rabattable s'ouvrant vers le bas, à l'intérieur de laquelle est maintenu l'arbre d'enroulement (6, 6a, 6b).
